# FASCICULE DE BREVET EUROPEEN

(11) **EP 2 231 446 B1**
(45) Date de publication et mention de la délivrance du brevet: **16.11.2011**
(21) Numéro de dépôt: 08863174.2
(22) Date de dépôt: 17.12.2008
(51) Int. Cl.: B60S 1/38

(54) **BALAI D'ESSUIE-GLACE POURVU D'UN CONNECTEUR ET PROCEDE D'ASSEMBLAGE D'UN TEL BALAI**
WISCHERBLATT MIT VERBINDER UND MONTAGEVERFAHREN FÜR EIN DERARTIGES BLATT
WIPER BLADE WITH CONNECTOR AND METHOD FOR ASSEMBLING SAID BLADE

(30) Priorité: 19.12.2007 FR 0708899
(43) Date de publication de la demande: 29.09.2010
(73) Titulaire: Valeo Systèmes d'Essuyage, 78321 La Verrière (FR)
(72) Inventeur: GRASSO, Giuseppe, F-63340 Le Breuil Sur Couze (FR); ESPINASSE, Philippe, F-63114 Coudes (FR)
(86) Numéro de dépôt international: PCT/EP2008/067758
(87) Numéro de publication internationale: WO 2009/077565

(56) Documents cités:
- EP-A- 1 627 787
- DE-A1- 10 038 397
- DE-A1- 10 043 427
- FR-A- 2 868 376

## Description

La présente invention concerne un balai d'essuie-glace comportant un connecteur chargé de son raccordement à un bras d'essuyage.

L'invention est également relative à un procédé d'assemblage d'un tel balai d'essuie-glace.

L'invention trouve une application particulièrement avantageuse dans le domaine des balais d'essuie-glace plats qui sont communément désignés par l'anglicisme "flat blade".

Un balai d'essuie-glace plat est essentiellement composé d'une lame d'essuyage souple qui est supportée par une structure support dans laquelle est insérée longitudinalement une vertèbre flexible, et sur laquelle est fixé un connecteur permettant de relier le balai à un bras d'un quelconque mécanisme d'entraînement. Il existe bien évidemment de nombreuses possibilités pour intégrer le connecteur à la structure support.

On connaît notamment un mode de réalisation dans lequel le connecteur est solidarisé directement sur la structure support. Dans le détail, le connecteur est constitué de deux éléments sensiblement symétriques par rapport au plan du balai. Ces derniers sont respectivement emboîtés de part et d'autre de la structure support, et sont solidarisés ensemble par l'intermédiaire d'éléments de fixation rapportés, tels que des vis.

Ce type d'agencement présente cependant l'inconvénient d'augmenter le nombre de composants du balai, mais aussi de complexifier significativement son assemblage. Au final, tout cela a malheureusement pour conséquence commune d'accroître le coût de fabrication d'un tel balai d'essuie-glace.

On sait par ailleurs qu'un connecteur peut également être assujetti à la vertèbre. Dans un tel cas de figure, le connecteur se présente sous la forme d'une pièce monobloc qui est conformée de façon à constituer la partie centrale de la structure support, en association avec deux éléments de monture complémentaires respectivement positionnés à chacune de ses extrémités. A ce titre, le connecteur dispose lui aussi d'un logement traversant dans lequel prend place la portion centrale de la vertèbre, ce qui génère un certain degré de solidarisation.

Outre des inconvénients similaires à ceux du premier type d'agencement précédemment décrit, cette seconde solution procure par ailleurs un maintien insuffisant de la vertèbre au niveau du connecteur. Un jeu d'assemblage transversal est en effet indispensable entre ces deux éléments pour rendre l'insertion possible, ce qui interdit donc tout blocage latéral de la vertèbre par le connecteur. Or un tel défaut d'immobilisation va naturellement nuire au maintien de la lame caoutchouc, entraînant de ce fait une altération des capacités d'essuyage de cette dernière. Le document FR 2868376A décrit un balai d'essuie-glace selon le préambule de la revendication 1.

Aussi, le problème technique à résoudre par l'objet de la présente invention, est de proposer un balai d'essuie-glace comprenant une lame d'essuyage qui est maintenue par une structure support dans laquelle est insérée longitudinalement une vertèbre flexible, et sur laquelle est solidarisé un connecteur destiné au raccordement dudit balai d'essuie-glace, balai d'essuie-glace qui permettrait d'éviter les problèmes de l'état de la technique en étant sensiblement moins onéreux à fabriquer, tout en offrant une qualité d'essuyage optimale.

La solution au problème technique posé consiste, selon la présente invention, en un balai l'essuie-place selon la reverdication 1. Le présente invention concerne également on ptocédée d'assemblage de bolai selon la revendiation 10.

Le principe de l'invention consiste donc à employer un connecteur qui est à même, d'une part, de s'emboîter partiellement sur la structure support, et d'autre part, d'être verrouillé rigidement dans cette position par la vertèbre. L'ensemble est agencé de manière à ce que l'emboîtement soit réalisable avec la vertèbre incomplètement insérée dans la structure support, et à ce que le verrouillage soit généré précisément en achevant cette insertion.

L'invention telle qu'ainsi définie présente l'avantage de mettre en jeu un nombre restreint de composants, par ailleurs particulièrement faciles à assembler les uns aux autres. En effet, le montage ne requiert aucune pièce supplémentaire et il s'opère simplement en emboîtant trois pièces monoblocs, à savoir le connecteur, la structure support et la vertèbre. Pour toutes ces raisons, un balai d'essuie-glace conforme à l'invention s'avère particulièrement intéressant économiquement parlant.

L'invention confère par ailleurs au connecteur, une capacité de maintien de la vertèbre qui est bien supérieure à celles de ses homologues de l'état de la technique. De manière générale, cela procure une qualité d'essuyage optimale au balai d'essuie-glace, et de façon plus particulière, cela permet d'être conforme aux cahiers des charges imposés par les constructeurs automobiles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:

La figure 1 représente un balai d'essuie-glace plat conforme à l'invention.

La figure 2 est un éclaté en perspective de dessus du balai d'essuie-glace visible à la figure 1.

La figure 3 constitue également un éclaté du balai d'essuie-glace, mais en perspective de dessous.

Les figures 4 à 9 illustrent l'assemblage du connecteur sur la structure support du balai d'essuie-glace.

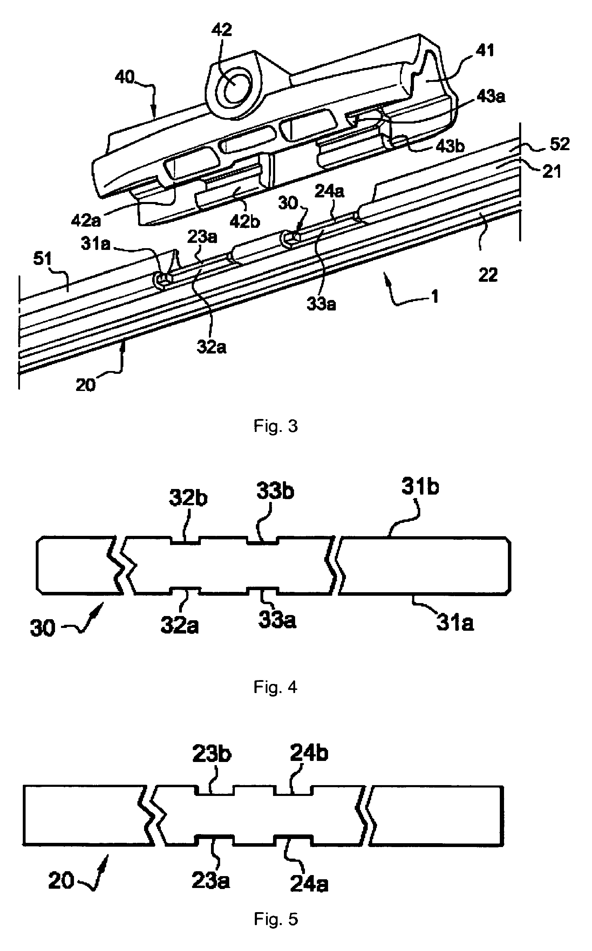

La figure 4 montre en détail la vertèbre du balai d'essuie-glace en vue de dessous.

La figure 5 fait quant à elle apparaître distinctement la structure support du balai d'essuie-glace, elle aussi en vue de dessous.

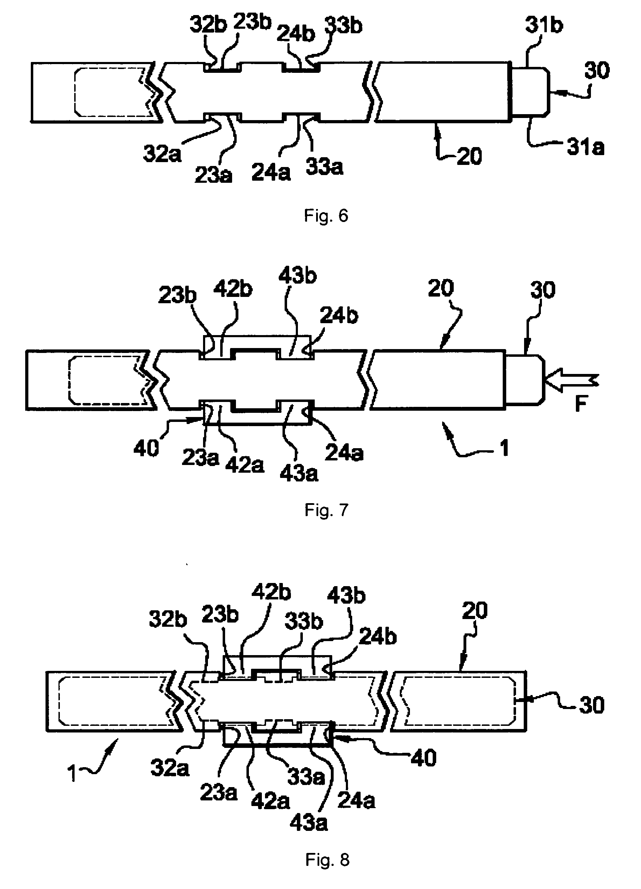

La figure 6 représente la vertèbre de la figure 4 en position d'assemblage à l'intérieur de la structure support de la figure 5.

La figure 7 illustre la mise en place du connecteur sur l'ensemble de la figure 6.

La figure 8 met en évidence le verrouillage du connecteur par la vertèbre en position d'utilisation.

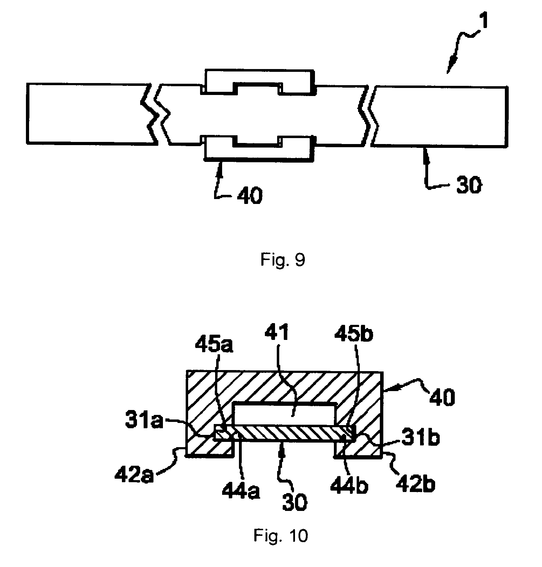

La figure 9 montre le balai d'essuie-glace une fois l'assemblage achevé.

La figure 10 est une coupe transversale faisant apparaître la vertèbre insérée en position d'utilisation dans le connecteur.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

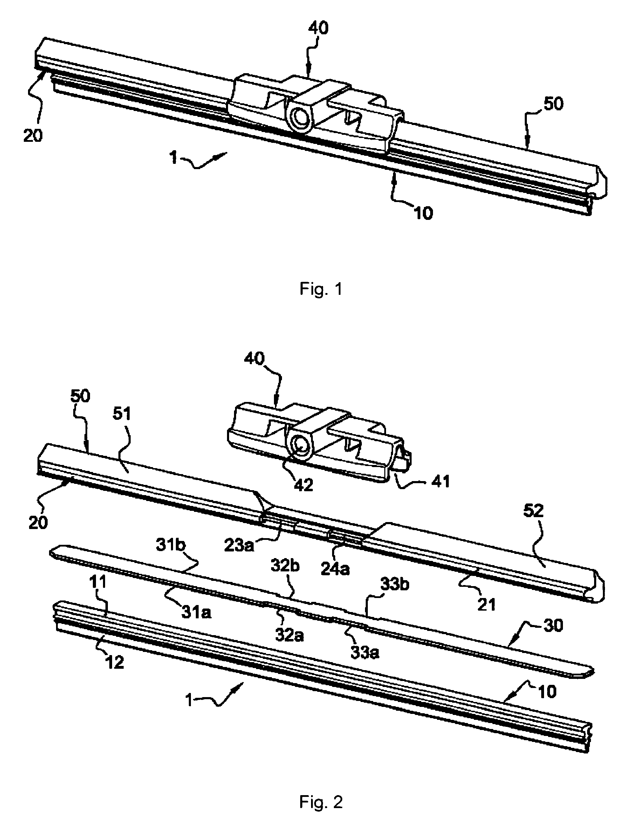

Les figures 1 et 2 représentent un balai plat 1 qui est destiné à équiper un dispositif d'essuie-glace de véhicule automobile. De manière classique, et ainsi qu'on peut le voir plus clairement sur l'éclaté de la figure 2, ce balai d'essuie-glace 1 est essentiellement composé d'une lame d'essuyage 10 qui est maintenue par une structure support 20 dans laquelle est insérée longitudinalement une vertèbre flexible 30, et sur laquelle est solidarisé un connecteur 40 destiné au raccordement dudit balai d'essuie-glace 1.

Dans le détail, la lame d'essuyage 10 est constituée par un profilé souple en élastomère, qui est principalement composé d'un talon 11 et d'une lèvre 12 articulés entre eux par l'intermédiaire d'une portion de moindre section, formant charnière.

La structure support 20 se présente quant à elle sous la forme d'un profilé en plastique 21 qui intègre longitudinalement, d'une part, un logement interne non visible ici mais dans lequel prend place la vertèbre 30, et d'autre part, un rail de maintien 22 (figure 3) le long duquel est engagé le talon 11 de la lame d'essuyage 10. Il est à noter qu'une fois le balai d'essuie-glace 1 assemblé, la lame d'essuyage 10 et la vertèbre 30 sont bloquées longitudinalement dans leurs logements respectifs, par obturation des extrémités ouvertes de la structure support 20. Dans le cas présent, cette opération est effectuée simplement par soudure, mais on peut également prévoir des éléments de blocage de la lame d'essuyage à insérer à chaque extrémité de la structure support une fois le balai d'essuyage assemblé.

Dans cet exemple de réalisation, un spoiler aérodynamique 50 est solidarisé à la partie supérieure du profilé 21 de la structure support 20. Il est également possible de réaliser le spoiler aérodynamique 50 par coextrusion lors de la fabrication de la structure support 20.

Le spoiler 50 est interrompu au niveau de la partie centrale du balai d'essuie-glace 1 afin de permettre l'implantation du connecteur 40. Le spoiler 50 est en fait constitué par deux profilés 51, 52 réalisés en élastomère.

Le connecteur 40 est pour sa part agencé de manière à pouvoir s'emboîter transversalement sur la structure support 20 (figures 3 et 7). C'est pourquoi il comporte un logement interne 41 dont la forme est sensiblement complémentaire de la portion de la structure support 20, qui est située entre les deux profilés 51, 52 du spoiler 50. Il dispose par ailleurs d'un alésage traversant 42, formant palier, qui est destiné à recevoir l'axe de pivotement d'un adaptateur compatible avec le bras du dispositif d'essuie-glace associé.

Conformément à l'objet de la présente invention, la structure support 20 est dotée sur chacun de ses côtés, de deux découpes 23a, 23b, 24a, 24b (figure 5) laissant apparaître les bords latéraux 31 a, 31 b de la vertèbre 30 quand cette dernière est complètement insérée dans ladite structure support 20, suivant une position dite d'utilisation (figure 8). Par ailleurs, la vertèbre 30 est quant à elle pourvue au niveau de ses bords latéraux 31 a, 31 b, de quatre encoches 32a, 32b, 33a, 33b (figure 4) qui sont à même d'être positionnées simultanément en regard des quatre découpes 23a, 23b, 24a, 24b quand ladite vertèbre 30 est partiellement insérée dans la structure support 20 (figure 6), suivant une position dite d'assemblage. Enfin, le connecteur 40 dispose pour sa part de quatre griffes 42a, 42b, 43a, 43b qui sont en mesure d'être engagées à travers respectivement les quatre découpes 23a, 23b, 24a, 24b et les quatre encoches 32a, 32b, 33a, 33b lorsque la vertèbre 30 est en position d'assemblage (figure 7), et d'être bloquées en déplacement par les bords latéraux 31 a, 31 b de ladite vertèbre 30 lorsque cette dernière est en position d'utilisation (figure 8).

De manière particulièrement avantageuse, au moins deux découpes 23a, 23b ; 24a, 24b respectivement ménagées de part et d'autre de la structure support 20, sont sensiblement symétriques l'une de l'autre par rapport au plan du balai d'essuie-glace 1.

Cela signifie ainsi qu'on peut le voir clairement à la figure 5, que les découpes 23a, 23b, 24a, 24b sont associées deux à deux le long de la structure support 20, et que les deux découpes 23a, 23b ; 24a, 24b de chaque paire sont ménagées sensiblement en vis-à-vis. A cet égard, il est entendu que le nombre de paires de découpes 23a, 23b ; 24a, 24b n'est en théorie aucunement limité.

Il est par ailleurs important de souligner que le positionnement relatif des différentes découpes 23a, 23b, 24a, 24b conditionne très directement celui des encoches 32a, 32b, 33a, 33b et des griffes 42a, 42b, 43a, 43b, étant donné que ces trois types d'éléments coopèrent étroitement au sein du balai d'essuie-glace en terme d'emboîtement. C'est ainsi que dans ce mode particulier de réalisation, choisi uniquement à titre d'exemple, les encoches 32a, 32b, 33a, 33b sont elles aussi réparties en vis-à-vis le long de la vertèbre 30 (figure 4), et que les griffes 42a, 42b, 43a, 43b sont implantées symétriquement au quatre coins du connecteur 40 (figures 7 à 9).

Quoi qu'il en soit, un telle symétrie structurelle présentent de nombreux avantages. Elle permet notamment de stabiliser l'emboîtement du connecteur 40 sur la structure support 20, de répartir uniformément les points de blocage permettant à la vertèbre 30 d'immobiliser le connecteur 40 suivant sa direction d'emboîtement, et d'homogénéiser le serrage transversal de la vertèbre 30 à l'intérieur de la structure support 20.

Conformément à une autre caractéristique avantageuse de l'invention, suivant la direction d'engagement des griffes 42a, 42b, 43a, 43b, chaque découpe 23a, 23b, 24a, 24b de la structure support (20) présente une taille supérieure ou égale à celle de l'encoche 32a, 32b, 33a, 33b de la vertèbre 30, qui lui est associée en position d'assemblage.

Le but est avant tout de ne pas gêner la coopération entre les griffes 42a, 42b, 43a, 43b et la vertèbre 30, c'est-à-dire de faciliter l'engagement desdites griffes 42a, 42b, 43a, 43b au niveau des encoches 32a, 32b, 33a, 33b, puis leur blocage par ladite vertèbre 30. Dans cet exemple de réalisation, les découpes 23a, 23b, 24a, 24b présentent une section qui n'est que très légèrement supérieure, mais qui est tout aussi rectangulaire que celle des encoches 32a, 32b, 33a, 33b.

Selon une particularité de l'invention, l'écartement transversal entre les encoches 32a, 32b, 33a, 33b est inférieur ou égal à l'écartement transversal entre les portions 44a, 44b des griffes 42a, 42b, 43a, 43b, qui sont chargées de bloquer les bords latéraux 31 a, 31 b de la vertèbre 30 en position d'utilisation (figure 10).

En cas d'agencement sensiblement symétrique comme dans le présent exemple de réalisation, cela revient à dire qu'au niveau des encoches 32a, 32b, 33a, 33b, la vertèbre 30 présente une largeur inférieure ou égale à la distance séparant transversalement les portions de griffes 42a, 42b, 43a, 43b qui sont destinées à coopérer par blocage avec les bords latéraux 31 a, 31 b de la vertèbre 30 lorsque cette dernière est en position d'utilisation.

Selon une autre particularité de l'invention, à l'écart de toute encoche 32a, 32b, 33a, 33b, la vertèbre 30 présente une largeur supérieure ou égale à l'écartement transversal entre les portions 45a, 45b des griffes 42a, 42b, 43a, 43b, qui sont destinées en position d'utilisation à s'étendre en regard des bords latéraux 31 a, 31 b de ladite vertèbre 30.

En considérant un agencement sensiblement symétrique du type de celui de l'exemple de réalisation, cela signifie que la largeur hors tout de la vertèbre 30 est supérieure ou égale à la distance séparant transversalement les intérieurs des griffes 42a, 42b, 43a, 43b placées en vis-à-vis, qui sont chargés de bloquer latéralement ladite vertèbre 30 lorsque cette dernière est en position d'utilisation.

Dans ces conditions, les griffes 42a, 42b, 43a, 43b vont être en mesure de générer un serrage dans le plan de la vertèbre 30, c'est-à-dire orthogonalement au plan du balai d'essuie-glace 1. Cela permet au final de supprimer avantageusement tout éventuel jeu latéral.

Selon une autre particularité de l'invention visible à la figure 10, chaque griffe 42a, 42b, 43a, 43b présente une forme interne sensiblement complémentaire du bord latéral correspondant 31 a, 31 b de la vertèbre 30.

Cette caractéristique permet d'accroître la cohésion entre la vertèbre 30 et le connecteur 40, et donc d'améliorer la tenue mécanique du balai d'essuie-glace 1 dans son ensemble.

De manière particulièrement avantageuse, la forme interne de chaque griffe 42a, 42b, 43a, 43b présente une hauteur inférieure ou égale à l'épaisseur de la vertèbre 30.

L'objectif est ici de permettre au connecteur 40 de générer sur la vertèbre 30 un serrage qui soit orienté parallèlement au plan du balai, et qui puisse venir compléter l'effet du serrage orthogonal audit plan du balai, précédemment décrit.

De préférence, le connecteur 40 est réalisé en matériau thermoplastique. Mais bien évidemment, tout autre matériau connu demeure parfaitement envisageable, comme par exemple du métal.

Il est entendu que l'invention concerne plus généralement tout dispositif d'essuie-glace notamment pour véhicule automobile, qui comporte au moins un balai d'essuie-glace 1 tel que précédemment décrit.

Ceci étant, l'invention est par ailleurs relative à un procédé d'assemblage d'un balai d'essuie-glace 1 tel que précédemment décrit. Ce procédé d'assemblage est remarquable en ce qu'il comporte les étapes consistant à:
- insérer partiellement la vertèbre 30 dans la structure support 20 jusqu'à atteindre la position d'assemblage dans laquelle les encoches 32a, 32b, 33a, 33b coïncident avec les découpes 23a, 23b, 24a, 24b (figure 6),
- emboîter le connecteur 40 sur la structure support 20 en engageant les griffes 42a, 42b, 43a, 43b au niveau des découpes 23a, 23b, 24a, 24b et des encoches 32a, 32b, 33a, 33b (figure 7),
- insérer complètement la vertèbre 30 à l'intérieur la structure support 20 (flèche f de la figure 7), jusqu'à atteindre la position d'utilisation dans laquelle les encoches 32a, 32b, 33a, 33b sont décalées longitudinalement par rapport aux découpes 23a, 23b, 24a, 24b, et donc par rapport aux griffes 42a, 42b, 43a, 43b (figure 8).

Grâce au tracé en pointillés de la vertèbre 30, les figures 7 et 8 illustrent bien cette séquence particulière du processus d'assemblage du balai d'essuie-glace 1.

On remarque notamment que lorsque la vertèbre 30 est en position d'assemblage conformément à la figure 7, la superposition des encoches 32a, 32b, 33a, 33b et des découpes 23a, 23b, 24a, 24b permet le passage des griffes 42a, 42b, 43a, 43b, et donc l'emboîtement du connecteur 40 sur la structure support 20.

Mais on observe également que le verrouillage du connecteur 40 s'opère en translatant (flèche f) la vertèbre 30 de la position d'assemblage à la position d'utilisation, ce qui provoque le décalage entre les encoches 32a, 32b, 33a, 33b et les découpes 23a, 23b, 24a, 24b. Le connecteur 40 se voient ainsi bloquées suivant sa direction d'emboîtement par les bords latéraux 31a, 31b de la vertèbre 30 qui jouent alors un rôle de butées vis-à-vis des griffes 42a, 42b, 43a, 43b.

De manière particulièrement avantageuse, l'emboîtement du connecteur 40 sur la structure support 20 s'opère suivant une direction sensiblement orthogonale à la direction d'insertion de la vertèbre 30 dans ladite structure support 20.

## Revendications

1. Balai d'essuie-glace (1) comprenant une lame d'essuyage (10) qui est maintenue par une structure support (20) dans laquelle est insérée longitudinalement une vertèbre flexible (30), et sur laquelle est solidarisé un connecteur (40) destiné au raccordement du balai d'essuie-glace (1), la structure support (20) comportant sur chacun de ses côtés, au moins une découpe (23a, 23b, 24a, 24b) laissant apparaître les bords latéraux (31 a, 31 b) de la vertèbre (30) quand cette dernière est complètement insérée dans ladite structure support (20) suivant une position dite d'utilisation, en ce que la vertèbre (30) comporte au niveau de ses bords latéraux (31 a, 31b) des encoches (32a, 32b, 33a, 33b), **caractérisé en ce que** les encoches sont aptes à être positionnées simultanément en regard des découpes (23a, 23b, 24a, 24b) quand ladite vertèbre (30) est partiellement insérée dans la structure support (20) suivant une position dite d'assemblage, et **en ce que** le connecteur (40) comporte des griffes (42a, 42b, 43a, 43b) aptes à être engagées à travers les découpes (23a, 23b, 24a, 24b) et les encoches (32a, 32b, 33a, 33b) lorsque la vertèbre (30) est en position d'assemblage, et à être bloquées en déplacement par les bords latéraux (31 a, 31 b) de ladite vertèbre (30) lorsque cette dernière est en position d'utilisation.

2. Balai d'essuie-glace (1) selon la revendication 1, **caractérisé en ce qu'**au moins deux découpes (23a, 23b ; 24a, 24b) respectivement ménagées de part et d'autre de la structure support (20), sont sensiblement symétriques l'une de l'autre par rapport au plan du balai d'essuie-glace (1).

3. Balai d'essuie-glace (1) selon l'une des revendications 1 ou 2, **caractérisé en ce que** suivant la direction d'engagement des griffes (42a, 42b, 43a, 43b), chaque découpe (23a, 23b, 24a, 24b) de la structure support (20) présente une taille supérieure ou égale à celle de l'encoche (32a, 32b, 33a, 33b) de la vertèbre (30), qui lui est associée en position d'assemblage.

4. Balai d'essuie-glace (1) selon l'une quelconque des revendications 1 à 3, **caractérisé en ce que** l'écartement transversal entre les encoches (32a, 32b, 33a, 33b) est inférieur ou égal à l'écartement transversal entre les portions (44a, 44b) des griffes (42a, 42b, 43a, 43b), qui sont chargées de bloquer les bords latéraux (31 a, 31 b) de la vertèbre (30) en position d'utilisation.

5. Balai d'essuie-glace (1) selon l'une quelconque des revendications 1 à 4, **caractérisé en ce qu'**à l'écart de toute encoche (32a, 32b, 33a, 33b), la vertèbre (30) présente une largeur supérieure ou égale à l'écartement transversal entre les portions (45a, 45b) des griffes (42a, 42b, 43a, 43b), qui sont destinées à s'étendre en regard des bords latéraux (31 a, 31 b) de ladite vertèbre (30) en position d'utilisation.

6. Balai d'essuie-glace (1) selon l'une quelconque des revendications 1 à 5, **caractérisé en ce que** chaque griffe (42a, 42b, 43a, 43b) présente une forme interne sensiblement complémentaire du bord latéral correspondant (31a, 31b) de la vertèbre (30).

7. Balai d'essuie-glace (1) selon l'une quelconque des revendications 1 à 6, **caractérisé en ce que** chaque griffe (42a, 42b, 43a, 43b) présente une forme interne dont la hauteur est inférieure ou égale à l'épaisseur de la vertèbre (30).

8. Balai d'essuie-glace (1) selon l'une quelconque des revendications 1 à 7, **caractérisé en ce que** le connecteur (40) est réalisé en matériau thermoplastique.

9. Dispositif d'essuie-glace notamment pour véhicule automobile, **caractérisé en ce qu'**il comporte au moins un balai d'essuie-glace (1) selon l'une quelconque des revendications précédentes.

10. Procédé d'assemblage d'un balai d'essuie-glace (1) selon l'une quelconque des revendications 1 à 8, **caractérisé en ce qu'**il comporte les étapes consistant à:
- insérer partiellement la vertèbre (30) dans la structure support (20) jusqu'à la position d'assemblage,
- emboîter le connecteur (40) sur la structure support (20) en engageant les griffes (42a, 42b, 43a, 43b) au niveau des découpes (23a, 23b, 24a, 24b) et des encoches (32a, 32b, 33a, 33b),
- insérer complètement la vertèbre (30) à l'intérieur la structure support (20) jusqu'à la position d'utilisation.

11. Procédé d'assemblage selon la revendication 10, **caractérisé en ce que** l'emboîtement du connecteur (40) sur la structure support (20) est réalisé suivant une direction sensiblement orthogonale à la direction d'insertion de la vertèbre (30) dans ladite structure support (20).

## Claims

1. A wiper blade (1) that comprises a wiping blade (10) which is held by a bearing structure (20) therein a flexible vertebra (30) is longitudinally inserted and which a connector (40), intended for connecting the wiper blade (1), is made integral with, with the bearing structure (20) including, on each one of the sides thereof, at least one cut (23a, 23b, 24a, 24b) exposing the side edges (31a, 31b) of the vertebra (30) when the latter is totally inserted into said bearing structure (20) in a so-called utilisation position, in that the vertebra (30) includes, at the level of the side edges (31a, 31b) thereof, notches (32a, 32b, 33a, 33b), with the notches being able to be simultaneously positioned opposite the cuts (23a, 23b, 24a, 24b) when said vertebra (30) is partially inserted into the bearing structure (20) according to a so-called assembling position, and in that the connector (40) includes claws (42a, 42b, 43a, 43b) able to be engaged through the cuts (23a, 23b, 24a, 24b) and the notches (32a, 32b, 33a, 33b) when the vertebra (30) is in the assembling position, and to be locked in terms of movement by the side edges (31a, 31b) of said vertebra (30) when the latter is in the utilisation position.

2. A wiper blade (1) according to claim 1, **characterised in** at least two cuts (23a, 23b, 24a, 24b), respectively formed on either side of the bearing structure (20), are substantially symmetrical to each other with respect to the plane of the wiper blade (1).

3. A wiper blade (1) according to one of claims 1 or 2, **characterized in that**, along the direction of engagement of the claws (42a, 42b, 43a, 43b), each cut (23a, 23b, 24a, 24b) of the bearing structure (20) has dimensions greater than or equal to those of the notch (32a, 32b, 33a, 33b) of the vertebra (30), which is associated therewith in the assembling position.

4. A wiper blade (1), according to any one of claims 1 to 3, characterised that at least the transversal distance between the notches (32a, 32b, 33a, 33b) is lower than or equal to the transversal distance between the portions (44a, 44b) of the claws (42a, 42b, 43a, 43b) which are provided for locking the side edges (31a, 31b) of the vertebra (30) in the utilisation position.

5. A wiper blade (1) according to any one of claims 1 to 4, **characterised in that** at a distance from any notch (32a, 32b, 33a, 33b), the vertebra (30) has a width that is greater than or equal to the transversal distance between the portions (45a, 45b) of the claws (42a, 42b, 43a, 43b), which are intended to extend opposite the side edges (31a, 31b) of said vertebra (30) in the utilisation position.

6. A wiper blade (1) according to any one of claims 1 to 5, **characterised in that** each claw (42a, 42b, 43a, 43b) has an internal shape substantially matching the corresponding side edge (31a, 31b) of the vertebra (30).

7. A wiper blade (1) according to any one of claims 1 to 6, **characterised in that** each claw (42a, 42b, 43a, 43b) has an internal shape, the height of which is lower than or equal to the thickness of the vertebra (30).

8. A wiper blade (1), according to any one of claims 1 to 7, **characterised in that** that the connector (40) is made of a thermoplastic material.

9. A wiping device, more particularly for a motor vehicle, **characterised in that** it includes at least one windscreen wiper blade (1) according to any one of the preceding claims.

10. A method for assembling a wiper blade (1) according to any one of claims 1 to 8, **characterised in that** it includes the following steps consisting in:
- partially inserting the vertebra (30) into the bearing structure (20), up to the assembling position,
- fitting the connector (40) onto the bearing structure (20) by engaging the claws (42a, 42b, 43a, 43b) at the level of the cuts (23a, 23b, 24a, 24b) and the notches (32a, 32b, 33a, 33b),
- totally inserting the vertebra (30) inside the bearing structure (20) up to the utilisation position.

11. An assembling method, according to claim 10, **characterised in that** the fitting of the connector (40) onto the bearing structure (20) is provided along a direction substantially orthogonal to the direction of insertion of the vertebra (30) into said bearing structure (20).

## Patentansprüche

1. Scheibenwischerarm (1) mit einem Wischblatt (10), das von einer Trägerstruktur (20) festgehalten wird, in der in Längsrichtung ein flexibler Wirbel (30) eingefügt ist, und auf der ein Anschlussglied (40) fest befestigt ist, das zum Anschluss des Scheibenwischerarms (1) bestimmt ist, wobei die Trägerstruktur (20) auf jeder ihrer Seiten wenigstens einen Ausschnitt (23a, 23b, 24a, 24b) umfasst, in dem die lateralen Ränder (31a, 31b) des Wirbels (30) zu sehen sind, wenn dieser komplett in die genannte Trägerstruktur (20) gemäß einer so genannten Nutzungsposition eingeführt ist, dass der Wirbel (30) an seinen lateralen Rändern (31a, 31b) Einkerbungen (32a, 32b, 33a, 33b) umfasst, **dadurch gekennzeichnet, dass** die Einkerbungen geeignet sind, gleichzeitig gegenüber den Ausschnitten (23a, 23b, 24a, 24b) positioniert zu werden, wenn der genannte Wirbel (30) teilweise in die Trägerstruktur (20) gemäß einer so genannten Montageposition eingeführt zu werden und dass das Anschlussglied (40) Krallen (42a, 42b, 43a, 43b) umfasst, die geeignet sind, durch die Ausschnitte (23a, 23b, 24a, 24b) und die Einkerbungen (32a, 32b, 33a, 33b) zum Eingreifen zu kommen, wenn der Wirbel (30) sich in der Montageposition befindet, und in Verschiebung durch die lateralen Ränder (31a, 31b) des genannten Wirbels (30) blockiert zu werden, wenn dieser sich in der Nutzungsposition befindet.

2. Scheibenwischerarm (1) gemäß Anspruch 1, **dadurch gekennzeichnet, dass** wenigstens zwei jeweils auf jeder Seite der Trägerstruktur (20) ausgesparte Ausschnitte (23a, 23b; 24a, 24b) im Verhältnis zur Ebene des Scheibenwischerarms (1) zueinander deutlich symmetrisch sind.

3. Scheibenwischerarm (1) gemäß Anspruch 1 oder 2, **dadurch gekennzeichnet, dass** gemäß der Eingreifrichtung der Krallen (42a, 42b, 43a, 43b) jeder Ausschnitt (23a, 23b, 24a, 24b) der Trägerstruktur (20) eine Größe von größer als oder gleich der der Einkerbung (32a, 32b, 33a, 33b) des Wirbels (30) aufweist, die ihm in der Montageposition zugeordnet ist.

4. Scheibenwischerarm (1) gemäß Anspruch 1 bis 3, **dadurch gekennzeichnet, dass** die transversale Beabstandung wischen den Einkerbungen (32a, 32b, 33a, 33b) kleiner als oder gleich der transversalen Beabstandung zwischen den Abschnitten (44a, 44b) der Krallen (42a, 42b, 43a, 43b) ist, die mit der Blockierung der lateralen Ränder (31a, 31b) des Wirbels (30) in der Nutzungsposition beauftragt sind.

5. Scheibenwischerarm (1) gemäß Anspruch 1 bis 4, **dadurch gekennzeichnet, dass** der von jeder Einkerbung (32a, 32b, 33a, 33b) beabstandete Wirbel (32a, 32b, 33a, 33b) eine größere oder gleiche Breite als / wie die transversale Beabstandung zwischen den Abschnitten (45a, 45b) der Krallen (42a, 42b, 43a, 43b) aufweist, die dazu bestimmt sind, sich gegenüber den lateralen Rändern (31a, 31b) des genannten Wirbels (30) in der Nutzungsposition zu erstrecken.

6. Scheibenwischerarm (1) gemäß Anspruch 1 bis 5, **dadurch gekennzeichnet, dass** jede Kralle (42a, 42b, 43a, 43b) eine interne Form aufweist, die deutlich komplementär zu dem dem Wirbel (30) entsprechenden lateralen Rand (31a, 31b) ist.

7. Scheibenwischerarm (1) gemäß Anspruch 1 bis 6, **dadurch gekennzeichnet, dass** jede Kralle (42a, 42b, 43a, 43b) eine interne Form aufweist, deren Höhe niedriger als oder gleich der Dicke des Wirbels (30) ist.

8. Scheibenwischerarm (1) gemäß Anspruch 1 bis 7, **dadurch gekennzeichnet, dass** das Anschlussglied (40) aus thermoplastischem Material realisiert ist.

9. Scheibenwischervorrichtung, insbesondere für ein Kraftfahrzeug, **dadurch gekennzeichnet, dass** sie wenigstens einen Scheibenwischerarm (1) gemäß einem der vorherigen Ansprüche umfasst.

10. Montageverfahren eines Scheibenwischerarms (1) gemäß Anspruch 1 bis 8, **dadurch gekennzeichnet, dass** er die Stufen umfasst, bestehend aus:
- Teilweisem Einführen des Wirbels (30) in die Trägerstruktur (20) bis zur Montageposition,
- Einklinken des Anschlussgliedes (40) auf der Trägerstruktur (20) unter Eingreifen der Krallen (42a, 42b, 43a, 43b) in den Ausschnitten (23a, 23b, 24a, 24b) und den Einkerbungen (32a, 32b, 33a, 33b),
- Komplettem Einführen des Wirbels (30) im Innern der Trägerstruktur (20) bis zur Nutzungsposition.

11. Montageverfahren gemäß Anspruch 10, **dadurch gekennzeichnet, dass** das Einklinken des Anschlussgliedes (40) auf der Trägerstruktur (20) gemäß einer deutlich orthogonalen Richtung zur Einführrichtung des Wirbels (30) in der genannten Trägerstruktur (20) realisiert wird.
